# EUROPÄISCHE PATENTSCHRIFT

(11) **EP 2 828 565 B1**
(45) Veröffentlichungstag und Bekanntmachung des Hinweises auf die Patenterteilung: **18.05.2016**
(21) Anmeldenummer: 13711598.6
(22) Anmeldetag: 12.03.2013
(51) Int. Cl.: F16L 19/10

(54) **MONTAGESYSTEM FÜR ROHRVERSCHRAUBUNGEN MIT SCHNEIDRING**
MOUNTING SYSTEM FOR PIPE SCREW CONNECTIONS HAVING A CUTTING RING
SYSTÈME DE MONTAGE DE RACCORDS VISSÉS À BAGUE COUPANTE POUR TUYAUX

(30) Priorität: 21.03.2012 DE 102012102415
(43) Veröffentlichungstag der Anmeldung: 28.01.2015
(73) Patentinhaber: VOSS Fluid GmbH, 51688 Wipperfürth (DE)
(72) Erfinder: SCHRÖER, Bettina, 51688 Wipperfürth (DE); BERGHAUS, Gerd, 51515 Kürten (DE); POTT, Harald, 42499 Hückeswagen (DE)
(74) Vertreter: Patent- und Rechtsanwälte Dr. Solf & Zapf
(86) Internationale Anmeldenummer: PCT/EP2013/054956
(87) Internationale Veröffentlichungsnummer: WO 2013/139641

(56) Entgegenhaltungen:
- EP-A2- 0 895 014
- DE-A1- 3 610 427
- DE-A1- 4 116 610
- DE-A1- 4 229 502
- DE-A1- 4 304 534
- DE-A1- 10 011 146
- DE-U1-202004 012 473
- "DIN EN ISO 8434-1 Metallische Rohrverschraubungen für Fluidtechnik und allgemeine Anwendung - Teil 1: Verschraubungen mit 24 DEG -Konus = Metallic tube connections for fluid power and general use - Part 1: 24 degree cone connectors (EN ISO 8434-1:2007)", DEUTSCHE NORMEN. DIN NORM,, Bd. 8434-1, 1. Februar 2008 (2008-02-01), Seiten 381-435, XP009147611, in der Anmeldung erwähnt

## Beschreibung

Die vorliegende Erfindung betrifft ein Montagesystem gemäß dem Oberbegriff des Anspruchs 1.

Aus dem Stand der Technik sind unterschiedliche Montagesysteme für Schneidringe bekannt, wozu auf die DE 036 10 427 C2, die EP 01287282 B1 und die EP 01776539 B1 verwiesen werden kann. Bei dem System gemäß der DE 036 10 427 C2 ist der Rohranschlag im Vormontagewerkzeug um einen bestimmten Weg kürzer als im Verschraubungsstutzen für die Endmontage. Hierdurch erreicht man zwar eine vorteilhafte Montagekennlinie bei der Endmontage, jedoch ist weder bei der Vor- noch bei der Endmontage ein definierter Endanschlag vorhanden.

Bei dem System gemäß der EP 01287282 B1 ist eine Profilierung der Endanschlagfläche vorgesehen, so dass sich bei korrekter Montage oder bei Übermontage auf dem Gegenanschlag eine Negativkontur abbildet, so dass abgelesen werden kann, ob eine korrekte Montage erfolgt ist. Dieses System ist aber nur bei einer Direktmontage im Verschraubungsstutzen anwendbar.

In der EP 01776539 B1 wird ein Schneidring mit einer spitzen Anschlagkante verwendet, wodurch einerseits eine zusätzliche Dichtkante zur Medienabdichtung und andererseits ein weicher Blockanschlag, d. h. eine weiche Anzugsbegrenzung geschaffen wird.

Bei Rohrverschraubungen mit Schneidringen, die metallisch dichtend sind, ist es erforderlich, dass zum Toleranzausgleich bei der Endmontage ein zusätzliches weiteres Einschneiden des Schneidrings bewirkt wird. Allerdings besteht das Problem, dass bei der Vormontage das Ende des Montagewegs im Normalfall nicht durch einen Kraftanstieg in der Montagekennlinie erkennbar ist, so dass eine definierte Vormontageendstellung, ab der für die Endmontage ein weiteres Einschneiden bewirkt werden soll, nicht prozesssicher definiert ist.

Ein solches Problem besteht beispielsweise in der DE 42 29 502 A1.

Der vorliegenden Erfindung liegt die Aufgabe zu Grunde, ein Montagesystem zu schaffen, bei dem bei der Vormontage eine definierte Wegbegrenzung bzw. ein definierter Montageweg erzielt wird, und bei dem bei der Endmontage ausgehend von der definierten Vormontageendstellung ein weiteres Einschneiden möglich ist.

Erfindungsgemäß wird dies durch die Merkmale des kennzeichnenden Teils des Anspruchs 1 erreicht. Durch den erfindungsgemäßen Distanzkörper wird ein verlängertes Vormontagewerkzeug erzeugt, so dass bei der Vormontage des Schneidrings eine Wegbegrenzung bzw. ein definierter Montageweg erzielt wird. Hierbei wird ein Blockanschlag des Schneidrings in der Vormontageendstellung genutzt. Dabei eignet sich die Erfindung sowohl für eine Direktmontage im Verschraubungsstutzen als auch für eine Vormontage im gehärteten Vormontagestutzen oder für eine Vormontage in Schneidring-Vormontagegeräten, denn auf Grund der Erfindung kann auch bei druckgesteuerten Vormontagegeräten ein definierter Montageweg eingehalten werden.

Für die Endmontage wird erfindungsgemäß die Möglichkeit geschaffen, über den Punkt des deutlichen Kraftanstiegs hinaus, der mit einem Einschneiden der Schneidkante in das Rohr verbunden ist, ein einmaliges oder mehrfaches Anziehen bzw. Weiterdrehen der Überwurfmutter durchzuführen, um ein weiteres Einschneiden des Schneidrings zu ermöglichen. Dies ist zum Toleranzausgleich und insbesondere für eine einmalige oder mehrfache Wiedermontage wesentlich.

Vorteilhafte Ausführungen der Erfindung sind in den Unteransprüchen und in der anschließenden Beschreibung enthalten und werden an Hand der in den Zeichnungen dargestellten Ausführungsbeispiele näher erläutert.

Es zeigen:
- Fig. 1: einen Schnitt durch eine erste Ausführungsform eines erfindungsgemäßen Montagesystems,
- Fig. 2 bis Fig. 4: Schnitte durch das Montagesystem gemäß Fig. 1 in unterschiedlichen Montagestellungen,
- Fig. 5: eine Ansicht einer Montagekennlinie eines erfindungsgemäßen Montagesystems bei Vor- und Endmontage,
- Fig. 6: eine weitere Ausführungsform eines erfindungsgemäßen Montagesystems in Schnittdarstellung und
- Fig. 7: eine alternative Ausführungsform eines erfindungsgemäßen Montagesystems in Schnittdarstellung.

In den verschiedenen Figuren der Zeichnungen sind gleiche Teile stets mit denselben Bezugszeichen versehen.

Das vorliegende erfindungsgemäße Montagesystem basiert vorzugsweise auf lösbaren Rohrverschraubungen mit Schneidringen nach ISO 8434-1 vom 01.09.2007 (second edition) und deren Montage nach DIN 3859-2 vom Juli 1999. Nach dieser Norm DIN 3859-2 wird zwischen folgenden Montagearten unterschieden, und zwar
- eine Direktmontage in einem Verschraubungsstutzen,
- eine Vormontage in einem Vormontagestutzen mit anschließender Fertigmontage im Verschraubungsstutzen.

Zusätzlich zur Vormontage im Vormontagestutzen von Hand nach DIN 3859-2 hat sich eine Vormontage mittels Vormontagegeräten im Markt durchgesetzt.

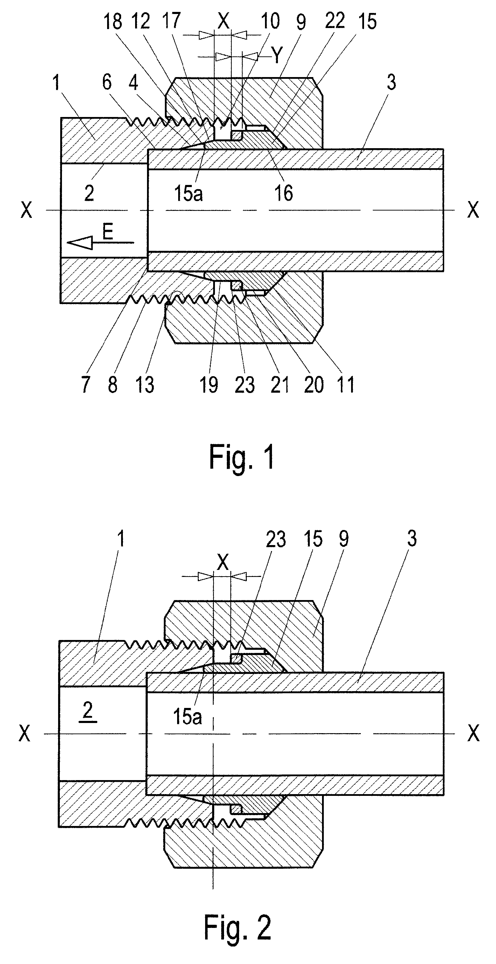

In Fig. 1 ist eine erste erfindungsgemäße Ausführung eines Montagesystems dargestellt. Dieses besteht aus einem Anschlussstutzen, der als Verschraubungsstutzen 1 ausgebildet ist. Dieser Verschraubungsstutzen 1 besitzt eine Bohrung 2 mit einem in Einsteckrichtung E eines anzuschließenden Rohres 3 vorderen Innenkonus 4 mit einem inneren verjüngten Ende. Der Konuswinkel des Innenkonus 4 zur mittleren Längsachse X-X beträgt vorzugsweise entsprechend den obengenannten Normen 12 °. Im Anschluss an den Innenkonus 4 schließt sich in Einsteckrichtung E ein kreiszylindrischer Führungsabschnitt 6 für das anzuschließende Rohr 3 an, der an einem ringförmigen, radialen Innenanschlag 7 endet. Dieser Innenanschlag 7 begrenzt die Einstecktiefe des Rohres 3 in dem Verschraubungsstutzen 1. An seinem äußeren Umfang weist der Verschraubungsstutzen 1 ein Außengewinde 8 auf. Weiterhin umfasst das Montagesystem eine Überwurfmutter 9 mit einer Durchgangsöffnung 10, mit der diese auf das Rohr 3 aufschiebbar ist. Die Durchgangsöffnung 10 verengt sich im inneren der Überwurfmutter 9 über eine konisch verlaufende Anlagefläche 11 auf einen Innendurchmesser, der ≥ dem Außendurchmesser des Rohres 3 ist. Die Durchgangsöffnung 10 weist in ihrem in Einsteckrichtung E gesehen vorderen, vor der Anlagefläche 11 liegenden Abschnitt 12 ein Innengewinde 13 auf, das auf das Außengewinde 8 abgestimmt ist, so dass die Überwurfmutter 9 auf den Verschraubungsstutzen 1 aufschraubbar ist.

Zwischen dem Verschraubungsstutzen 1 und der Überwurfmutter 9 ist ein Schneidring 15 auf dem Rohr 3 angeordnet. Der Schneidring 15 weist hierfür eine Durchgangsbohrung 16 auf, deren Innendurchmesser ≥ dem Außendurchmesser des Rohres 3 ist. Der Schneidring 15 besitzt in Einsteckrichtung E gesehen eine vordere, dem Innenkonus 4 zugekehrte Außenkontur 17, die in Bezug auf ihre Abmessungen dem Innenkonus 4 angepasst ist. Hierzu wird insbesondere auf die eingangs genannten Normen verwiesen. Die Außenkontur 17 beginnt am vorderen Ende 18 des Schneidrings 15 und läuft in einem kreiszylindrischen Abschnitt 19 aus, der an einem umfänglichen, im Sinne einer Durchmessererweiterung sich erstreckenden Anschlagkörper 20 endet. Dieser Anschlagkörper 20 besitzt im Schnitt gesehen eine radial oder schräg zur Längsachse X-X verlaufende vordere Anschlagfläche 21. Der Schneidring 15 weist in Einsteckrichtung E gesehen an seinem vorderen Ende mindestens eine Schneide bzw. Schneidkante 15a auf. Der Außendurchmesser des Anschlagkörpers 20 ist ≤ dem Innendurchmesser des Innengewindes 13 der Überwurfmutter 8. Der Anschlagkörper 20 weist an seinem hinteren Ende in Einsteckrichtung E gesehen eine konisch verlaufende Gegenfläche 22 zur Anlagefläche 11 der Überwurfmutter 9 auf.

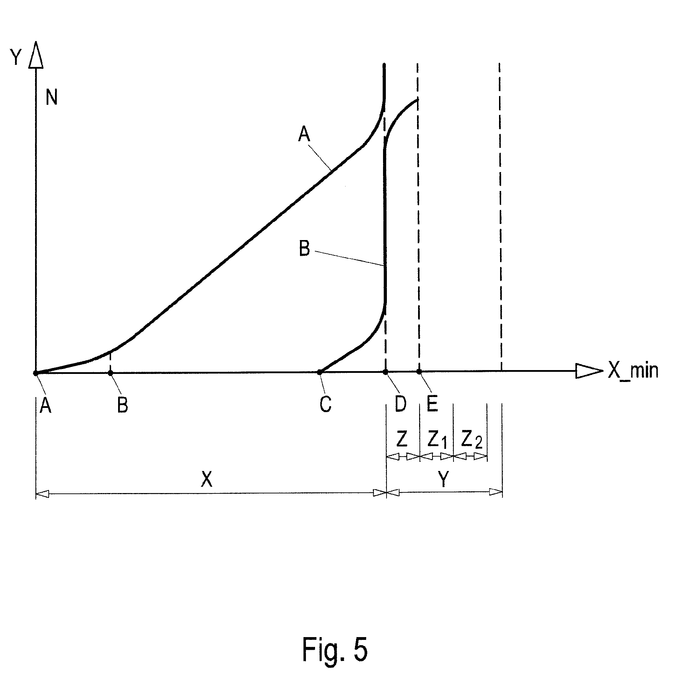

Das erfindungsgemäße Montagesystem weist einen ringförmigen Distanzkörper 23 auf, der zwischen der Anschlagfläche 21 und dem gegenüberliegenden Ende des Verschraubungsstutzens 1 am Umfang des Schneidrings15 für eine Vormontage des Schneidrings 15 auf dem Rohr 3 angeordnet ist und im Bereich des zylindrischen Abschnitts 19 des Schneidrings15 positioniert ist. Dieser Distanzkörper 23 besteht vorzugsweise aus einem formstabilen, druckfesten Werkstoff, vorzugsweise einem metallischen Werkstoff. Der Distanzkörper 23 besitzt eine Breite Y, die einen axialen Verschiebeweg Z zwischen dem Verschraubungsstutzen 1 und dem Schneidring 15 ermöglicht, den bei einer Endmontage des Schneidrings 15 auf dem Rohr 3 die Überwurfmutter 9 über einen Punkt D eines Kraftanstiegs hinaus, siehe Fig. 5, Kurve B, bei einer aufzubringenden Anzugskraft bei vorzugsweise mindestens 0,041, insbesondere 0,083 bis 0,25 Umdrehungen der Überwurfmutter 9 auf einem zu ihrem Innengewinde 13 passenden Außengewinde zurücklegt. Damit wird erfindungsgemäß eine praktisch nicht begrenzte Verschiebung über den Punkt D des deutlichen Kraftanstiegs hinaus, in dem bei einer Vormontage die Schneidkante 15a in das Rohr um mindestens 0,1 mm eingedrungen ist, ermöglicht. Der Innenkonus 4 des Verschraubungsstutzens 1 und die Außenkontur 17 des Schneidrings 15 bzw. der Schneidring 15 selbst sind derart aufeinander abgestimmt bzw. dimensioniert, dass bei der Vormontage des Schneidrings 15 auf dem Rohr 3 nach dem Einführen der Außenkontur 17 in den Innenkonus 4 mittels der Überwurfmutter 9 bis zu einer gegenseitigen Anlage der Außenkontur 17 am Innenkonus 4 und der Überwurfmutter 9 am Schneidring 15 die Überwurfmutter 9 axial um einen Anzugsweg X verschiebbar ist, der vorzugsweise mindestens 0,5, vorzugsweise 1,0 bis 1,5 Umdrehungen der Überwurfmutter 9 auf dem ihrem Innengewinde 13 entsprechenden Außengewinde entspricht. Am Ende des Anzugsweges X ist eine Anlage des Verschraubungsstutzens 1 mittels des Distanzkörpers 23 an der Anlagefläche 21 des Anschlagkörpers 20 des Schneidrings 15 vorhanden und zudem ist der Schneidring 15 mit seiner Schneidkante 15a um mindestens 0,1 mm, vorzugsweise 0,2-0,5 mm in das Rohr 3 bzw. dessen Wandung eingedrungen. Bei einer Ausgestaltung des Verschraubungsstutzens 1 und des Schneidrings 15 nach ISO 8434-1 entspricht der Anzugsweg insbesondere 1,5 Umdrehungen der Überwurfmutter 9. Der Verschiebeweg Z entspricht vorzugsweise 0,083 bis 0,25 Umdrehungen der Überwurfmutter 9. Zudem ist die Breite Y des Distanzkörpers 23 derart vorzugsweise bemessen, dass ein mehrfaches Nachziehen der Überwurfmutter 9 über den Punkt D des deutlichen Kraftanstiegs und ein weiteres Einschneiden der Schneidkante 15a bei einer Wiedermontage möglich ist, so dass sich eine Addition der jeweiligen auftretenden Verschiebewege Z, Z₁, Z₂, siehe Fig. 5, ergeben kann.

Der gesamte Montagevorgang mittels des erfindungsgemäßen Montagesystems entsprechend Fig. 1 läuft wie folgt ab, siehe hierzu die Fig. 2 bis 5. Hier zeigen in Fig. 5 die Kurven A und B den Kräfteverlauf der Anzugskraft bei der Vormontage (Kurve A) und bei der Endmontage (Kurve B).

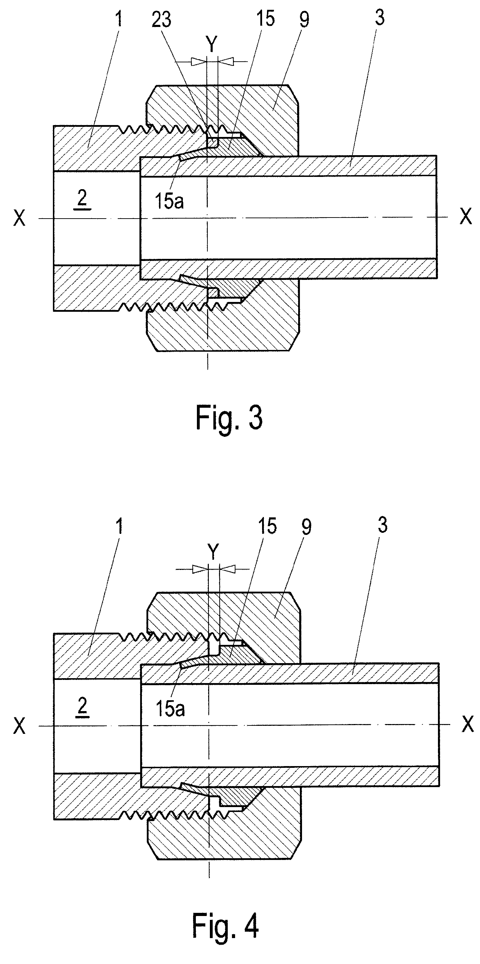

Die Überwurfmutter 9 und der Schneidring 15 werden auf das Rohr 3 aufgeschoben und danach wird der Distanzkörper 23 auf den Schneidring 15 im Bereich des zylindrischen Abschnitts 19 angeordnet. Danach wird die Überwurfmutter 9 von Hand bis zur fühlbaren Anlage des Verschraubungsstutzens 1 und der Überwurfmutter 9 am Schneidring 15 auf den Verschraubungsstutzen 1 aufgeschraubt. Dieser Montagezustand ist in Fig. 2 dargestellt und stellt den Ausgangspunkt für eine Vormontage des Schneidrings 15 auf dem Rohr 3 dar. In Fig. 5 entspricht diese Stellung dem Punkt A auf der X-Achse der Kurve A. Anschließend folgt ein Bereich mit geringem Kraftanstieg, bis der Schneidring mit seiner Schneidkante 15a das Rohr 3 erfasst, siehe Punkt B in Fig. 5. Hierbei muss sichergestellt sein, dass das Rohr 3 an der inneren Anschlagfläche 7 des Verschraubungsstutzens 1 anliegt. Danach wird die Überwurfmutter 9 soweit angezogen, und zwar ausgehend von Punkt A vorzugsweise mit mindestens 0,5, vorzugsweise mit 1,0 bis 1,5 Umdrehungen, so dass es zum Einschneiden des Schneidrings 15 in das Rohr 3 um mindestens 0,1 mm kommt, wobei am Ende des Anzugsweges der Verschraubungsstutzen 1 mittels des Distanzkörpers 23 an der Anschlagfläche 21 des Anschlagkörpers 20 anliegt. Durch diese Blockanlage entsteht ein deutlicher, insbesondere sprunghafter Anstieg der Anzugskraft, wie dies in Fig. 5, siehe Punkt D auf der X-Achse, dargestellt ist, wobei die Kurve A den Verlauf der Anzugskraft über den Anzugsweg darstellt und wobei der Punkt D das Ende des Montagewegs X markiert, an dem die Blockanlage zwischen dem Verschraubungsstutzen 1 und dem Schneidring 15 mittels des Distanzkörpers 23 vorhanden ist. Diese Endstellung der Vormontage ist in Fig. 3 dargestellt, wobei zu erkennen ist, wie der Schneidring 15 mit seiner Schneidkante 15a in das Rohr 3 eingedrungen ist. Die Einschnitttiefe des Schneidrings 15 in das Rohr 3 ist mindestens 0,1 mm, vorzugsweise 0,2-0,5 mm. Hierbei füllt insbesondere das sichtbar aufgeworfene Rohrmaterial (Bundaufwurf) mindestens 50 %, vorzugsweise 80 % bis 100 % der Schneidenstirnfläche des Schneidrings 15 aus. Erfindungsgemäß handelt es sich insbesondere um Schneidringe für Rohrverschraubungen nach ISO 8434-1.

Das Maß der Einschnitttiefe kann einerseits zusammen mit dem Verdrehungsmaß der Überwurfmutter 9 für den Montageweg X vorliegen oder das Maß der Einschnitttiefe ist erfindungsgemäß unabhängig von dem Verdrehungsmaß ein erfindungsgemäßes Kriterium für den Montageweg X.

Sobald diese Vormontageendstellung erreicht worden ist, wird die Überwurfmutter 9 von dem Verschraubungsstutzen 1 abgeschraubt und der Verschraubungsstutzen 1 von dem Rohr 3 entfernt.

Vor der nun durchzuführenden Endmontage wird der Distanzkörper 23 von dem Schneidring 15 abgezogen.

Der Distanzkörper 23 kann an dem Schneidring 15 kraft- und/oder formschlüssig befestigt sein, wobei diese Befestigung derart ausgestaltet sein muss, dass der Distanzkörper 23 vor der Endmontage wieder vom Schneidring 15 gelöst werden kann. Befestigungsmöglichkeiten sind beispielsweise derart, dass der Distanzkörper 23 auf dem Schneidring 15 aufgeklebt ist, dass zwischen dem Distanzkörper 23 und dem Schneidring 15 ein weicher Presssitz mit einem Elastomer-Zwischenelement vorhanden ist oder aber ein derartiger weicher Presssitz durch ein radiales Schlitzen des Distanzkörpers 23 erreicht wird.

Die Anlagefläche 21 des Anschlagkörpers 20 und/oder die Anlageflächen des Distanzkörpers 23 verlaufen vorzugsweise 90 ° zur Längsachse X-X. Andere Winkel zur Längsachse X-X, etwa zwischen 45 ° und 90 ° und sogar über 90 ° hinaus, sind ebenfalls möglich.

Die Anlageflächen 21 bzw. die Anlageflächen des Distanzkörpers 23 können auch konturiert sein und vorstehende Vorsprünge aufweisen, um hierdurch Einprägungen in den Gegenflächen zu erzeugen.

Für die Endmontage im Verschraubungsstutzen 1 wird das Rohr 3 mit dem vormontierten Schneidring 15 in den Innenkonus des Verschraubungsstutzens 1 eingeführt. Die Überwurfmutter 9 wird bis zur fühlbaren Anlage des Schneidrings 15 im Verschraubungsstutzen 1 und der Überwurfmutter 9 am Schneidring 15 handfest auf den Verschraubungsstutzen 1 aufgeschraubt, siehe Punkt C in Fig. 5. Die Überwurfmutter 9 wird nun mit geringer Kraft angezogen wird, siehe Kurve B in Fig. 5, bis der Punkt D des deutlich spürbaren Kraftanstiegs erreicht ist. In dieser Phase wird der elastisch zurückgefederte Schneidring 15 wieder in seine Position am Ende der Vormontage gebracht. Diese nun erreichte Montageposition entspricht praktisch der Vormontageendstellung nach Abschluss der Vormontage, wie in Fig. 3 gezeigt.

Wie in Fig. 4 zu erkennen ist, ist nun aber auf Grund dessen, dass der Distanzkörper 23 entfernt ist, zwischen der Anschlagfläche 21 und der gegenüberliegenden Endfläche des Verschraubungsstutzens 1 ein Spalt vorhanden, der eine Breite besitzt, die der Breite Y des Distanzkörpers 23 entspricht. Die Überwurfmutter 9 wird nun vorzugsweise um mindestens 0,041, entsprechend einem Drehwinkel von 15 °, insbesondere 0,083 bis 0,25 Umdrehungen entsprechend einem Drehwinkel von 30 ° bis 90 ° über den Punkt D des spürbaren Kraftanstiegs, siehe Fig. 5, bis Punkt E angezogen entsprechend einem Verschiebeweg Z, so dass der Schneidring 15 sich etwas weiter in das Rohr 3 einschneidet als bei der Vormontage, wodurch ein Toleranzausgleich sichergestellt wird. Der Verlauf der Anzugskraft ist in Kurve B in Fig. 5 dargestellt. Durch den erfindungsgemäßen Distanzkörper 23 wird praktisch der Verschraubungsstutzen 1 bei der Vormontage um den Betrag Y verlängert. Dieser Betrag Y entspricht bei der Endmontage dem Spalt, der zum einmaligen oder mehrfachen Nachmontieren über den Punkt D des deutlichen Kraftanstiegs bei der Vormontage hinaus zur Verfügung steht, wobei Y insbesondere derart bemessen ist, dass eine wiederholte Wiedermontage möglich ist, so dass Y einem Mehrfachen von Z bei der ersten Endmontage entsprechen kann, so dass eine Addition der Verschiebewege Z, Z₁, Z₂ möglich ist.

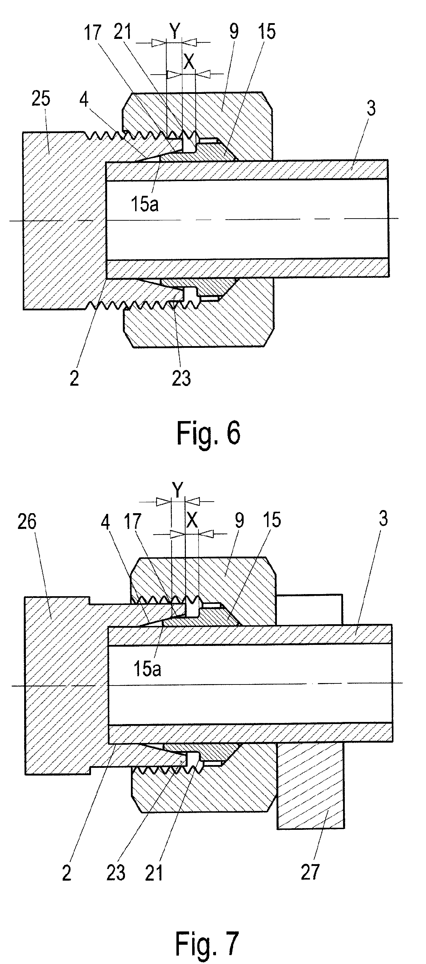

In Fig. 6 ist eine weitere Ausführungsform eines erfindungsgemäßen Montagesystems gezeigt. Hierbei ist der Verschraubungsstutzen 1 durch einen Vormontagestutzen 25 ersetzt. Dieser Vormontagestutzen 25 besteht vorzugsweise aus einem gehärteten Material, so dass dieser Vormontagestutzen 25 eine höhere Standzeit als der Verschraubungsstutzen 1 besitzt und somit eine Vielzahl von Vormontagen mit diesem Vormontagestutzen 25 durchgeführt werden können. Der Vormontagestutzen 25 ist geometrisch identisch mit dem Verschraubungsstutzen 1, so dass insofern in vollem Umfange auf die Beschreibung des Verschraubungsstutzens 1 zu Fig. 1 ff verwiesen werden kann. Der Vormontagestutzen 25 bzw. 26 besitzt jedoch eine Bohrung 2, die anders als in Fig. 1 nicht als Durchgangsbohrung ausgebildet ist. Allerdings ist der Vormontagestutzen 25 im dargestellten Ausführungsbeispiel einstückig mit dem Distanzkörper 23 ausgebildet, so dass der Vormontagestutzen 25 endseitig an seinem der Anschlagfläche 21 gegenüberliegenden Ende um die Breite Y des Distanzkörpers 23 verlängert ist. An Stelle einer einstückigen Ausbildung des Distanzkörpers 23 am Vormontagestutzen 25 kann alternativ auch eine kraft- und/oder formschlüssige Verbindung des Distanzkörpers 23 am Vormontagestutzen 25 vorgesehen sein. Was die Durchführung der Vormontage des Schneidrings 15 betrifft, so kann im vollen Umfange auf den Vormontageablauf gemäß den Fig. 2 und 3 verwiesen werden, so dass das Ende der Vormontage dann erreicht ist, wenn im dargestellten Ausführungsbeispiel der Fig. 6 der Vormontagestutzen 25 mit seinem einstückigen Distanzkörper 23 an der Anlagefläche 21 anliegt. Nun wird die Rohrverschraubung gelöst und der Vormontagestutzen 25 wird entfernt und ersetzt durch einen Verschraubungsstutzen 1, so dass auf die Endmontage gemäß Fig. 4, wie dort im Einzelnen beschrieben, im vollen Umfange verwiesen werden kann.

In Fig. 7 ist eine weitere Ausführung eines erfindungsgemäßen Montagesystems dargestellt. Hierbei handelt es sich um eine Ausführungsform zur Verwendung in einem Schneidring-Vormontagegerät. Bei dieser Ausführungsform wird ein Vormontagestutzen 26 verwendet, der sich von dem Vormontagestutzen 25 dadurch unterscheidet, dass er an seinem äußeren Umfang kein Außengewinde besitzt. Somit besitzt der Vormontagestutzen 26 eine äußere zylindrische Oberfläche. Im Übrigen ist aber der Vormontagestutzen 26, was die Ausbildung seiner Bohrung 2 betrifft, geometrisch identisch mit dem Vormontagestutzen 25. Auch bei dieser Ausführungsform ist der Vormontagestutzen 26 einstückig mit dem Distanzkörper 23 ausgebildet, so dass sich der Vormontagestutzen 26 um die Breite Y des Distanzkörpers 23 verlängert. Auch hier ist alternativ eine zweiteilige Ausführung möglich. Da der Vormontagestutzen 26 kein Außengewinde aufweist, kann die Überwurfmutter 9 auch nicht aufgeschraubt werden, sondern der Vormontagestutzen 26 wird gegen einen im Vormontagegerät vorhandenen, beispielsweise U-förmigen Gegenhalter 27 in die Überwurfmutter 9 eingepresst. In Fig. 7 ist die Startstellung für eine Vormontage des Schneidrings 15 dargestellt, in der eine Anlage zwischen dem Vormontagestutzen 26, dem Schneidring 15 und der Überwurfmutter 9 gegeben ist. Aus dieser Anlagestellung wird dann der Vormontagestutzen 26 um den Weg X verschoben, so dass nach der entsprechenden Verschiebung der Vormontagestutzen 26 mittels des einstückig angeformten Distanzkörpers 23 an der Anschlagfläche 21 des Schneidrings 15 anliegt, so dass der Schneidring 15 mit seiner Schneidkante in das Rohr 3 eingedrungen ist und der Endpunkt der Vormontage, wie in Fig. 3 dargestellt ist, erreicht wird.

Nach dem Erreichen der Vormontageendstellung wird der Vormontagestutzen 26 zurückgezogen und es erfolgt dann eine Endmontage mittels eines Verschraubungsstutzens 1, wie zu Fig. 4 beschrieben ist.

Die Vormontage mittels eines Schneidring-Vormontagegeräts ist ein serientaugliches Verfahren, um mit einer Montagemaschine Schneidringe 15 vorzumontieren. Insbesondere bei einfachen, druckgesteuerten Vormontagegeräten zeigt die Erfindung ihre besondere Stärke. Durch den erfinderischen Anschlag über den Distanzkörper 23 kommt es bei solchen Geräten zu einem sprunghaften Druckanstieg am Ende der Vormontage und somit zu sehr gleichbleibenden Vormontageergebnissen.

## Patentansprüche

1. Montagesystem für eine Rohrverschraubung mit Schneidring, bestehend aus mindestens einem Anschlussstutzen in Form eines Verschraubungsstutzens (1) mit einer Bohrung (2), mit einem in Einsteckrichtung (E) eines anzuschließenden Rohres (3) vorderen Innenkonus (4) mit einem inneren verjüngten Ende und einer auf das anzuschließende Rohr (3) aufschiebbaren Überwurfmutter (9) mit einem Innengewinde (13) in ihrer Durchgangsöffnung (10) sowie mit einem zwischen dem Verschraubungsstutzen (1) und der Überwurfmutter (9) auf dem anzuschließenden Rohr (3) angeordneten Schneidring (15) mit mindestens einer Schneidkante (15a) mit einer dem Innenkonus (4) zugekehrten Außenkontur (17), wobei am in Einsteckrichtung (E) hinteren Ende der Außenkontur (17) ein umfangsgemäßer Anschlag (20, 21) ausgebildet ist,
**dadurch gekennzeichnet, dass** für eine Vormontage des Schneidrings (15) auf dem Rohr (3) zwischen dem umfangsgemäßen Anschlag (20) des Schneidrings (15) und einem in Einsteckrichtung (E) gesehen vorderen Ende des Verschraubungsstutzens (1) ein den Schneidring (15) umfangsgemäß umfassender, ringförmiger Distanzkörper (23) entfernbar angeordnet ist, dessen Breite (Y) einen axialen Verschiebeweg (Z, Z₁, Z₂) zwischen dem Verschraubungsstutzen (1) und dem Schneidring (15) nach dem Entfernen des Distanzkörpers (23) für die Endmontage ermöglicht, den bei der Endmontage des Schneidrings (15) in der Rohrverschraubung die Überwurfmutter (9) über einen Punkt (D) eines spürbaren Kraftanstiegs einer bei der Vormontage aufzubringenden Anzugskraft hinaus zurücklegt, und wobei bei der Vormontage des Schneidrings (15) und des Distanzkörpers (23) auf dem Rohr (3) nach dem Einführen der Außenkontur (17) des Schneidrings (15) in den Innenkonus (4) bis zu einer gegenseitigen Anlage der Außenkontur (17) an dem Innenkonus (4) und der Überwurfmutter (9) am Schneidring (15) die Überwurfmutter (9) und der Verschraubungsstutzen (1) axial um einen Anzugsweg (X) relativ zueinander verschiebbar sind, so dass die Schneidkante (15a) derart in das Rohr (3) eindringen kann, dass mindestens eine Eindringtiefe der Schneidkante (15a) von 0,1 mm gegeben ist und am Ende des Anzugsweges (X) eine Anlage des Verschraubungsstutzens (1) mittels des Distanzkörpers (23) an der Anlagefläche (21) des Schneidrings (15) vorhanden ist, so dass durch die gegenseitige Anlage der Punkt (D) des deutlichen Anstiegs der Anzugskraft entsteht.

2. Montagesystem nach Anspruch 1,
**dadurch gekennzeichnet, dass** der axiale Verschiebeweg (Z, Z₁, Z₂) zwischen dem Verschraubungsstutzen (1) und dem Schneidring (15) bei der Endmontage über den Punkt (D) des deutlichen Kraftanstiegs hinaus mindestens 0,041, vorzugsweise 0,083 bis 0,25 Umdrehungen der Überwurfmitter (9) auf einem zu dem Innengewinde (13) passenden Außengewinde, insbesondere gemäß ISO 8434-1 für Rohrverschraubungen mit Schneidringen, entspricht.

3. Montagesystem nach Anspruch 1 oder 2,
**dadurch gekennzeichnet, dass** der Anzugsweg (X) mindestens 0,5, vorzugsweise 1,0-1,5 Umdrehungen der Überwurfmutter (9) auf dem ihren Innengewinde (13) entsprechenden Außengewinde entspricht, insbesondere entsprechend ISO 8434-1 für Rohrverschraubungen mit Schneidringen.

4. Montagesystem nach einem der Ansprüche 1 bis 3,
**dadurch gekennzeichnet, dass** der Anzugsweg (X) derart ist, dass die Schneidkante (15a) an Ende des Anzugswegs (X) derart in das Rohr (3) eingedrungen ist, dass mindestens 50 % einer Stirnfläche der Schneidkante (15a) von einem aufgeworfenen Rohrmaterial bedeckt sind.

5. Montagesystem nach einem der Ansprüche 1 bis 4,
**dadurch gekennzeichnet, dass** die Breite (Y) des Distanzkörpers (23) derart bemessen ist, dass nach dem Erreichen des Punkts (D) des deutlichen Anstiegs der Anzugskraft bei der Endmontage und dem Eindringen des Schneidrings (15) in das Rohr (3) eine einmalige oder mehrfache axiale Verschiebung um einen Verschiebeweg (Z, Z₁, Z₂) zwischen dem Verschraubungsstutzen (1) und dem Schneidring (15) über den Punkt (D) des deutlichen Kraftanstiegs hinaus für eine einmalige oder mehrfache Wiedermontage möglich ist.

6. Montagesystem nach Anspruch 4,
**dadurch gekennzeichnet, dass** das aufgeworfene Rohrmaterial 80 % bis 100 % der Stirnfläche der eingedrungenen Schneidkante bedeckt.

7. Montagesystem nach einem der Ansprüche 1 bis 6,
**dadurch gekennzeichnet, dass** der Verschraubungsstutzen (1) an einem inneren, sich verjüngenden Ende des Innenkonus (4) einen zylindrischen Abschnitt (6) mit einer radial verlaufenden Endfläche als Innenanschlag (7) für das anzuschließende Rohr (3) aufweist.

8. Montagesystem nach einem der Ansprüche 1 bis 7,
**dadurch gekennzeichnet, dass** der Anschlussstutzen bzw. Verschraubungsstutzen (1) mit einem Außengewinde (8) zum Aufschrauben der Überwurfmutter (9) auf den Verschraubungsstutzen (1) ausgebildet ist.

9. Montagesystem für eine Rohrverschraubung mit Schneidring, bestehend aus mindestens einem Anschlussstutzen in Form eines Verschraubungsstutzens (1) mit einer Bohrung (2), mit einem in Einsteckrichtung (E) eines anzuschließenden Rohres (3) vorderen Innenkonus (4) mit einem inneren verjüngten Ende und einer auf das anzuschließende Rohr (3) aufschiebbaren Überwurfmutter (9) mit einem Innengewinde (13) in ihrer Durchgangsöffnung (10) sowie mit einem zwischen dem Verschraubungsstutzen (1) und der Überwurfmutter (9) auf dem anzuschließenden Rohr (3) angeordneten Schneidring (15) mit mindestens einer Schneidkante (15a) mit einer dem Innenkonus (4) zugekehrten Außenkontur (17), wobei am in Einsteckrichtung (E) hinteren Ende der Außenkontur (17) ein umfangsgemäßer Anschlag (20, 21) ausgebildet ist,
**dadurch gekennzeichnet, dass** für eine Vormontage des Schneidrings (15) auf dem Rohr (3) zwischen dem umfangsgemäßen Anschlag (20) des Schneidrings (15) und einem in Einsteckrichtung (E) gesehen vorderen Ende eines Vormontagestutzens (25, 26) ein den Schneidring (15) umfangsgemäß umfassender, ringförmiger Distanzkörper (23) angeordnet ist, dessen Breite (Y) einen axialen Verschiebeweg (Z, Z₁, Z₂) zwischen dem Verschraubungsstutzen (1) und dem Schneidring (15) bei der Endmontage ermöglicht, den bei der Endmontage des Schneidrings (15) in der Rohrverschraubung die Überwurfmutter (9) über einen Punkt (D) eines spürbaren Kraftanstiegs einer bei der Vormontage aufzubringenden Anzugskraft hinaus zurücklegt, und wobei der Distanzkörper (23) an dem Vormontagestutzen (25, 26) endseitig an dessen dem Schneidring (15) zugekehrten Ende einstückig oder formschlüssig ausgebildet ist, so dass der Vormontagestutzen (25, 26) um die Breite (Y) des Distanzkörpers (23) gegenüber dem Verschraubungsstutzen (1) verlängert ist, und wobei bei der Vormontage des Schneidrings (15) auf dem Rohr (3) nach dem Einführen der Außenkontur (17) in einen Innenkonus (4) des Vormontagestutzens (25, 26) bis zu einer gegenseitigen Anlage der Außenkontur (17) an dem Innenkonus (4) des Vormontagestutzens (25, 26) und der Überwurfmutter (9) am Schneidring (15) die Überwurfmutter (9) und der Vormontagestutzen (25, 26) axial um den Anzugsweg (X) relativ zueinander verschiebbar sind, so dass die Schneidkante (15a) derart in das Rohr (3) eindringen kann, dass mindestens eine Eindringtiefe der Schneidkante (15a) von 0,1 mm gegeben ist und am Ende des Anzugswegs (X) eine Anlage des Vormontagestutzens (25, 26) mittels seines Distanzkörpers (23) an der Anlagefläche (21) des Schneidrings (15) vorhanden ist, so dass durch die gegenseitige Anlage der Punkt (D) des deutlichen Anstiegs der Anzugskraft entsteht.

10. Montagesystem nach Anspruch 9,
**gekennzeichnet durch** die Merkmale des kennzeichnenden Teils zumindest einer der Ansprüche 2 bis 8.

11. Montagesystem nach Anspruch 10,
**dadurch gekennzeichnet, dass** der Vormontagestutzen (25) mit einem umfangsgemäßen Außengewinde (8) ausgebildet ist, das dem Innengewinde (13) der Überwurfmutter (9) angepasst ist.

12. Montagesystem nach Anspruch 11,
**dadurch gekennzeichnet, dass** der Vormontagestutzen (26) an seinem Umfang eine Zylinderfläche aufweist, deren Außendurchmesser kleiner als der Gewindeinnendurchmesser des Innengewindes (13) ist.

13. Montagesystem nach den Ansprüchen 1 bis 8,
**dadurch gekennzeichnet, dass** der Distanzkörper (23) mit dem Schneidring (15) kraft- und formschlüssig oder kraftschlüssig lösbar verbunden ist.

14. Montagesystem nach einem der Ansprüche 1 bis 13,
**dadurch gekennzeichnet, dass** die Anschlagfläche (21) des Anschlagkörpers (20) des Schneidrings (15) radial oder schräg zu einer mittleren Längsachse (X-X) des Rohres (3) verläuft.

15. Montagesystem nach einem der Ansprüche 1 bis 14,
**dadurch gekennzeichnet, dass** die Anschlagfläche (21) des Anschlagkörpers (20) und/oder die Anlageflächen des Distanzkörpers (23) eine Prägekontur in Form von einem oder mehreren Vorsprüngen aufweisen.

16. Montagesystem nach einem der Ansprüche 1 bis 15,
**dadurch gekennzeichnet, dass** der Distanzkörper (23) aus einem formstabilen, druckfesten Werkstoff, vorzugsweise einem metallischen Werkstoff, besteht.

## Claims

1. Assembly system for a screwed pipe connection having a cutting ring, consisting of at least one connecting piece in the form of a screwed connection piece (1) with a bore (2), having a front inner cone (4), in the plug-in direction (E) of a pipe (3) to be connected, with an inner tapered end and a union nut (9) which is slidable onto the pipe (3) to be connected and having an internal thread (13) in its through-opening (10), and having a cutting ring (15), arranged between the screwed connection piece (1) and the union nut (9) on the pipe (3) to be connected, with at least one cutting edge (15a) with an external contour (17) facing the inner cone (4), wherein a circumferential stop (20, 21) is formed on the rear end of the external contour (17) in the plug-in direction (E),
**characterized in that**, for pre-assembly of the cutting ring (15) on the pipe (3), an annular spacer (23) that circumferentially surrounds the cutting ring (15) is arranged in a removable manner between the circumferential stop (20) of the cutting ring (15) and a front end, as seen in the plug-in direction (E), of the screwed connection piece (1), the width (Y) of said spacer (23) allowing an axial displacement path (Z, Z₁, Z₂) between the screw connection piece (1) and the cutting ring (15) after removal of the spacer (23) for final assembly, said displacement path (Z, Z₁ Z₂) being covered, during the final assembly of the cutting ring (15) in the screwed pipe connection, by the union nut (9) beyond a point (D) of a perceptible increase in pressure of a tightening force to be applied during the pre-assembly, and wherein, during the pre-assembly of the cutting ring (15) and the spacer (23) on the pipe (3), after the introduction of the external contour (17) of the cutting ring (15) into the inner cone (4) up to mutual abutment of the external contour (17) against the inner cone (4) and of the union nut (9) against the cutting ring (15), the union nut (9) and the screwed connection piece (1) are displaceable axially through a tightening path (X) relative to one another, such that the cutting edge (15a) can penetrate into the pipe (3) such that there is a penetration depth of the cutting edge (15a) of 0.1 mm, and at the end of the tightening path (X), the screwed connection piece (1) butts by means of the spacer (23) against the abutment face (21) of the cutting ring (15), such that, as a result of the mutual abutment, the point (D) of the considerable increase in the tightening force arises.

2. Assembly system according to Claim 1,
**characterized in that**, during final assembly, the axial displacement path (Z, Z₁, Z₂) between the screwed connection piece (1) and the cutting ring (15) beyond the point (D) of the considerable increase in force corresponds to at least 0.041, preferably 0.083 to 0.25 revolutions of the union nut (9) on an external thread that matches the internal thread (13), in particular in accordance with ISO 8434-1 for screwed pipe connections with cutting rings.

3. Assembly system according to Claim 1 or 2,
**characterized in that** the tightening path (X) corresponds to at least 0.5, preferably 1.0-1.5 revolutions of the union nut (9) on the external thread corresponding to its internal thread (13), in particular as per ISO 8434-1 for screwed pipe connections with cutting rings.

4. Assembly system according to one of Claims 1 to 3,
**characterized in that** the tightening path (X) is such that the cutting edge (15a) has penetrated into the pipe (3) to such an extent at the end of the tightening path (X) that at least 50% of an end face of the cutting edge (15a) is covered by raised pipe material.

5. Assembly system according to one of Claims 1 to 4,
**characterized in that** the width (Y) of the spacer (23) is dimensioned such that, once the point (D) of the considerable increase in the tightening force during final assembly has been reached and the cutting ring (15) has penetrated into the pipe (3), a single or multiple axial displacement along a displacement path (Z, Z₁, Z₂) between the screw connection piece (1) and the cutting ring (15) beyond the point (D) of the considerable increase in pressure is possible for single or multiple reassembly.

6. Assembly system according to Claim 4,
**characterized in that** the raised pipe material covers 80% to 100% of the end face of the penetrated cutting edge.

7. Assembly system according to one of Claims 1 to 6,
**characterized in that** the screwed connection piece (1) has, at an inner, tapering end of the inner cone (4), a cylindrical portion (6) with a radially extending end face as inner stop (7) for the pipe (3) to be connected.

8. Assembly system according to one of Claims 1 to 7,
**characterized in that** the connecting piece or screwed connection piece (1) is configured with an external thread (8) for screwing the union nut (9) onto the screwed connection piece (1).

9. Assembly system for a screwed pipe connection having a cutting ring, consisting of at least one connecting piece in the form of a screwed connection piece (1) with a bore (2), having a front inner cone (4), in the plug-in direction (E) of a pipe (3) to be connected, with an inner tapered end and a union nut (9) which is slidable onto the pipe (3) to be connected and having an internal thread (13) in its through-opening (10), and having a cutting ring (15), arranged between the screwed connection piece (1) and the union nut (9) on the pipe (3) to be connected, with at least one cutting edge (15a) with an external contour (17) facing the inner cone (4), wherein a circumferential stop (20, 21) is formed on the rear end of the external contour (17) in the plug-in direction (E),
**characterized in that**, for pre-assembly of the cutting ring (15) on the pipe (3), an annular spacer (23) that circumferentially surrounds the cutting ring (15) is arranged between the circumferential stop (20) of the cutting ring (15) and a front end, as seen in the plug-in direction (E), of a pre-assembly connecting piece (25, 26), the width (Y) of said spacer (23) allowing an axial displacement path (Z, Z₁, Z₂) between the screw connection piece (1) and the cutting ring (15) during final assembly, said displacement path (Z, Z₁, Z₂) being covered, during the final assembly of the cutting ring (15) in the screwed pipe connection, by the union nut (9) beyond a point (D) of a perceptible increase in pressure of a tightening force to be applied during the pre-assembly, and wherein the spacer (23) is formed integrally or in a form-fitting manner on the end side of the pre-assembly connecting piece (25, 26) at the end thereof facing the cutting ring (15), such that the pre-assembly connecting piece (25, 26) is extended with respect to the screwed connection piece (1) by the width (Y) of the spacer (23), and wherein, during the pre-assembly of the cutting ring (15) on the pipe (3), after the introduction of the external contour (17) into an inner cone (4) of the pre-assembly connecting piece (25, 26) up to mutual abutment of the external contour (17) against the inner cone (4) of the pre-assembly connecting piece (25, 26) and of the union nut (9) against the cutting ring (15), the union nut (9) and the pre-assembly connecting piece (25, 26) are displaceable axially through the tightening path (X) relative to one another, such that the cutting edge (15a) can penetrate into the pipe (3) such that there is at least a penetration depth of the cutting edge (15a) of 0.1 mm, and at the end of the tightening path (X), the pre-assembly connecting piece (25, 26) butts by means of its spacer (23) against the abutment face (21) of the cutting ring (15), such that, as a result of the mutual abutment, the point (D) of the considerable increase in the tightening force arises.

10. Assembly system according to Claim 9,
**characterized by** the features of the characterizing part of at least one of Claims 2 to 8.

11. Assembly system according to Claim 10,
**characterized in that** the pre-assembly connecting piece (25) is configured with a circumferential external thread (8) which matches the internal thread (13) of the union nut (9).

12. Assembly system according to Claim 11,
**characterized in that** the pre-assembly connecting piece (26) has at its circumference a cylinder surface, the outside diameter of which is smaller than the thread inside diameter of the internal thread (13).

13. Assembly system according to one of Claims 1 to 8,
**characterized in that** the spacer (23) is connected to the cutting ring (15) in a force- and form-fitting manner or in a releasable force-fitting manner.

14. Assembly system according to one of Claims 1 to 13,
**characterized in that** the stop surface (21) of the stop body (20) of the cutting ring (15) extends radially or obliquely with respect to a longitudinal centre axis (X-X) of the pipe (3).

15. Assembly system according to one of Claims 1 to 14,
**characterized in that** the stop surface (21) of the stop body (20) and/or the stop surfaces of the spacer (23) have an embossed contour in the form of one or more protrusions.

16. Assembly system according to one of Claims 1 to 15,
**characterized in that** the spacer (23) consists of a dimensionally stable, pressure-resistant material, preferably a metal material.

## Revendications

1. Système de montage pour un raccord vissé avec bague coupante pour tuyaux, se composant d'au moins un embout de raccordement sous la forme d'un embout à visser (1), avec
un alésage (2), avec un cône intérieur avant (4) dans la direction d'engagement (E) d'un tuyau à raccorder (3) avec une extrémité intérieure rétrécie et un écrou de raccord (9) apte à s'engager sur le tuyau à raccorder (3) avec un filet intérieur (13) dans son ouverture de passage (10) ainsi qu'avec une bague coupante (15) disposée sur le tuyau à raccorder (3) entre l'embout à visser (1) et l'écrou de raccord (9), avec au moins une arête de coupe (15a) avec un contour extérieur (17) tourné vers le cône intérieur (4), dans lequel une butée périphérique (20, 21) est formée sur l'extrémité arrière du contour extérieur (17) dans la direction d'engagement (E),
**caractérisé en ce que**, pour un pré-montage de la bague coupante (15) sur le tuyau (3), un corps d'écartement annulaire (23), entourant en périphérie la bague coupante (15), est disposé de façon amovible entre la butée périphérique (20) de la bague coupante (15) et une extrémité avant, vue dans la direction d'engagement (E), de l'embout à visser (1), corps dont la largeur (Y) permet une course de déplacement axiale (Z, Z₁, Z₂) entre l'embout à visser (1) et la bague coupante (15), après l'enlèvement du corps d'écartement (23), pour le montage final, course que, lors du montage final de la bague coupante (15) dans le raccord vissé, l'écrou de raccord (9) parcourt au-delà d'un point (D) marquant une hausse notable de la force d'une force de serrage à appliquer lors du pré-montage, et dans lequel, lors du pré-montage de la bague coupante (15) et du corps d'écartement (23) sur le tuyau (3) après l'introduction du contour extérieur (17) de la bague coupante (15) dans le cône intérieur (4) jusqu'à un appui mutuel du contour extérieur (17) sur le cône intérieur (4) et de l'écrou de raccord (9) sur la bague coupante (15), l'écrou de raccord (9) et l'embout à visser (1) peuvent être déplacés l'un par rapport à l'autre axialement d'une course de serrage (X), de telle manière que l'arête de coupe (15a) puisse pénétrer dans le tuyau (3) de telle manière qu'il y ait au moins une profondeur de pénétration de l'arête de coupe (15a) de 0,1 mm et qu'à la fin de la course de serrage (X) il existe un appui de l'embout à visser (1) au moyen du corps d'écartement (23) contre la face de butée (21) de la bague coupante (15), de telle manière que l'appui mutuel génère le point (D) de la nette hausse de la force de serrage.

2. Système de montage selon la revendication 1,
**caractérisé en ce que** la course de déplacement axiale (Z, Z₁, Z₂) entre l'embout à visser (1) et la bague coupante (15) lors du montage final au-delà du point (D) de la nette hausse de la force corresponde au moins à 0,041, de préférence 0,083 à 0,25 tours de l'écrou de raccord (9) sur un filet extérieur adapté au filet intérieur (13), en particulier selon la norme ISO 8434-1 pour les raccords vissés avec bagues coupantes pour tuyaux.

3. Système de montage selon la revendication 1 ou 2,
**caractérisé en ce que** la course de serrage (X) correspond au moins à 0,5, de préférence à 1,0-1,5 tours de l'écrou de raccord (9) sur le filet extérieur correspondant à son filet intérieur (13), en particulier selon la norme ISO 8434-1 pour raccords vissés avec bagues coupantes pour tuyaux.

4. Système de montage selon l'une quelconque des revendications 1 à 3, **caractérisé en ce que** la course de serrage (X) est telle que l'arête de coupe (15a) est enfoncée, à la fin de la course de serrage (X), dans le tuyau (3) de telle manière qu'au moins 50 % d'une face frontale de l'arête de coupe (15a) soient couverts par du matériau de tuyau refoulé.

5. Système de montage selon l'une quelconque des revendications 1 à 4, **caractérisé en ce que** la largeur (Y) du corps d'écartement (23) est dimensionnée de telle manière que, après la formation du point (D) de la nette hausse de la force de serrage lors du montage final et la pénétration de la bague coupante (15) dans le tuyau (3), un déplacement axial unique ou multiple d'une course de déplacement (Z, Z₁, Z₂) entre l'embout à visser (1) et la bague coupante (15) au-delà du point (D) de la nette hausse de la force est possible pour un nouveau montage unique ou multiple.

6. Système de montage selon la revendication 4,
**caractérisé en ce que** le matériau de tuyau refoulé couvre 80 % à 100 % de la face frontale de l'arête de coupe enfoncée.

7. Système de montage selon l'une quelconque des revendications 1 à 6, **caractérisé en ce que** l'embout à visser (1) présente à une extrémité intérieure décroissante du cône intérieur (4) une section cylindrique (6) avec une face d'extrémité orientée radialement comme butée intérieure (7) pour le tuyau à raccorder (3).

8. Système de montage selon l'une quelconque des revendications 1 à 7, **caractérisé en ce que** l'embout de raccordement ou l'embout à visser (1) est formé avec un filet extérieur (8) pour le vissage de l'écrou de raccord (9) sur l'embout à visser (1).

9. Système de montage pour un raccord vissé avec bague coupante pour tuyaux, se composant d'au moins un embout de raccordement sous la forme d'un embout à visser (1), avec un alésage (2), avec un cône intérieur avant (4) dans la direction d'engagement (E) d'un tuyau à raccorder (3) avec une extrémité intérieure rétrécie et un écrou de raccord (9) apte à s'engager sur le tuyau à raccorder (3) avec un filet intérieur (13) dans son ouverture de passage (10) ainsi qu'avec une bague coupante (15) disposée sur le tuyau à raccorder (3) entre l'embout à visser (1) et l'écrou de raccord (9), avec au moins une arête de coupe (15a) avec un contour extérieur (17) tourné vers le cône intérieur (4), dans lequel une butée périphérique (20, 21) est formée sur l'extrémité arrière du contour extérieur (17) dans la direction d'engagement (E),
**caractérisé en ce que**, pour un pré-montage de la bague coupante (15) sur le tuyau (3), un corps d'écartement annulaire (23), entourant en périphérie la bague coupante (15), est disposé entre la butée périphérique (20) de la bague coupante (15) et une extrémité avant, vue dans la direction d'engagement (E), d'un embout de pré-montage (25, 26), corps dont la largeur (Y) permet une course de déplacement axiale (Z, Z₁, Z₂) entre l'embout à visser (1) et la bague coupante (15) lors du montage final, course que, lors du montage final de la bague coupante (15) dans le raccord vissé, l'écrou de raccord (9) parcourt au-delà d'un point (D) marquant une hausse notable de la force d'une force de serrage à appliquer lors du pré-montage, et dans lequel le corps d'écartement (23) est formé sur l'embout de pré-montage (25, 26), d'une seule pièce ou par emboîtement, du côté de l'extrémité à son extrémité tournée vers la bague coupante (15), de telle manière que l'embout de pré-montage (25, 26) soit prolongé de la largeur (Y) du corps d'écartement (23) par rapport à l'embout à visser (1), et dans lequel, lors du pré-montage de la bague coupante (15) sur le tuyau (3) après l'introduction du contour extérieur (17) dans un cône intérieur (4) de l'embout de pré-montage (25, 26) jusqu'à un appui mutuel du contour extérieur (17) sur le cône intérieur (4) de l'embout de pré-montage (25, 26) et de l'écrou de raccord (9) sur la bague coupante (15), l'écrou de raccord (9) et l'embout de pré-montage (25, 26) peuvent être déplacés l'un par rapport à l'autre axialement d'une course de serrage (X), de telle manière que l'arête de coupe (15a) puisse pénétrer dans le tuyau (3) de telle manière qu'il y ait au moins une profondeur de pénétration de l'arête de coupe (15a) de 0,1 mm et qu'à la fin de la course de serrage (X) il existe un appui de l'embout de pré-montage (25, 26) au moyen de son corps d'écartement (23) contre la face de butée (21) de la bague coupante (15), de telle manière que l'appui mutuel génère le point (D) de la nette hausse de la force de serrage.

10. Système de montage selon la revendication 9,
**caractérisé par** les caractéristiques de la partie caractéristique d'au moins une des revendications 2 à 8.

11. Système de montage selon la revendication 10,
**caractérisé en ce que** l'embout de pré-montage (25) est réalisé avec un filet extérieur périphérique (8), qui est adapté au filet intérieur (13) de l'écrou de raccord (9).

12. Système de montage selon la revendication 11,
**caractérisé en ce que** l'embout de pré-montage (26) présente à sa périphérie une surface cylindrique, dont le diamètre extérieur est plus petit que le diamètre intérieur de filet du filet intérieur (13).

13. Système de montage selon les revendications 1 à 8,
**caractérisé en ce que** le corps d'écartement (23) est assemblé de façon démontable à la bague coupante (15) par adhérence et emboîtement ou par adhérence.

14. Système de montage selon l'une quelconque des revendications 1 à 13, **caractérisé en ce que** la face de butée (21) du corps de butée (20) de la bague coupante (15) s'étend radialement ou en oblique par rapport à un axe longitudinal central (X-X) du tuyau (3).

15. Système de montage selon l'une quelconque des revendications 1 à 14, **caractérisé en ce que** la face de butée (21) du corps de butée (20) et/ou les faces de butée du corps d'écartement (23) présentent un contour en relief sous la forme d'une ou de plusieurs saillie(s).

16. Système de montage selon l'une quelconque des revendications 1 à 15, **caractérisé en ce que** le corps d'écartement (23) se compose d'un matériau de forme stable, résistant à la pression, de préférence un matériau métallique.
